# EUROPÄISCHE PATENTSCHRIFT

(11) **EP 2 874 781 B1**
(45) Veröffentlichungstag und Bekanntmachung des Hinweises auf die Patenterteilung: **12.10.2016**
(21) Anmeldenummer: 13750269.6
(22) Anmeldetag: 16.07.2013
(51) Int. Cl.: B23K 37/02, B23K 37/04, B23K 7/06

(54) **FLÄMMMASCHINE ZUM FLÄMMEN VON WARMEN UND KALTEN WERKSTÜCKEN, WIE BRAMMEN, BLÖCKE UND KNÜPPEL AUS STAHL**
SCARFING MACHINE FOR SCARFING HOT AND COLD WORKPIECES MADE OF STEEL, SUCH AS SLABS, BLOCKS AND BILLETS
MACHINE DE DÉCRIQUAGE AU CHALUMEAU DESTINÉE AU DÉCRIQUAGE AU CHALUMEAU DE PIÈCES CHAUDES ET FROIDES, TELLES QUE DES BRAMES, DES LINGOTS ET DES BILLETTES EN ACIER

(30) Priorität: 17.07.2012 DE 202012102639 U
(43) Veröffentlichungstag der Anmeldung: 27.05.2015
(73) Patentinhaber: Gefam GmbH, 61462 Königstein im Taunus (DE)
(72) Erfinder: LOTZ, Horst Karl, 61462 Königstein im Taunus (DE)
(74) Vertreter: Köllner, Malte
(86) Internationale Anmeldenummer: PCT/EP2013/064988
(87) Internationale Veröffentlichungsnummer: WO 2014/012922

(56) Entgegenhaltungen:
- WO-A1-2011/160692
- DE-C- 734 651
- US-A- 3 929 324

## Beschreibung

Die Erfindung bezieht sich auf eine Flämmmaschine zum Flämmen von warmen und kalten Werkstücken, wie Brammen, Blöcke und Knüppel aus Stahl, für den Einsatz in oder nach Stranggießanlagen mit einen in Transportrichtung des Werkstückes befindlichen Rollgang, auf dem das zu flämmende Werkstück vor und zurück verfahrbar ist, gemäß dem Oberbegriff des Anspruchs 1 (siehe, z.B. DE 734 651 61).

### Stand der Technik

Insbesondere Brammen, Blöcke und Knüppel aus Stahl werden gewöhnlich konditioniert bzw. geputzt, um normabweichende Gefügestrukturen und Oberflächenfehler, wie zum Beispiel Risse, Grate und Schlackeneinschlüsse und dergleichen, zu entfernen.

Ein Flämmvorgang wird üblicherweise dadurch eingeleitet, dass zunächst eine Kante oder ein Streifen auf der Werkstückoberfläche auf Eisenzündtemperatur erhitzt wird. Die Breite des Streifens ist normalerweise gleich der Breite der gewünschten Flämmbahn. Ein Flämmsauerstoffstrom wird dann auf den vorgeheizten Streifen aufgeblasen und es erfolgt eine Relativbewegung zwischen Flämmsauerstoffstrom und Werkstück.

Dabei wird in der Regel das Werkstück horizontal flach auf einer seiner Breitseiten liegend auf einem Transport-Rollengang zu den Flämmbrennern und entlang der Flämmbrenner geführt. Eine herkömmliche Flämmvorrichtung weist horizontal ausgerichtete obere und gegebenenfalls untere Flämmeinheiten auf, die quer über die Breite und die Endabschnitte einer Halterung fest montiert sind, um gleichzeitig die langen Schmalseiten eines Werkstückes zu flämmen, wenn das Werkstück flach liegend zwischen den Flämmeinheiten hindurchgeführt wird. Sollen auch die Breitseiten des Werkstückes geflämmt werden, wird das Werkstück aufgestellt, so dass mehrere Arbeitsgänge notwendig sind. Nachteilig ist, dass hierbei eine außerhalb des Rollenganges angeordnete Wendeeinrichtung verwendet wird, die sehr wuchtig, massig und schwer ist, um beispielsweise ein 30 t-Werkstück zu drehen.

Aus der WO 2011/160692 A1 ist eine Flämmeinrichtung an einem in Transportrichtung des Werkstückes befindlichen Rollgang bekannt, auf dem das zu flämmende Werkstück liegt. Weiterhin sind eine Aufstellvorrichtung zum Aufstellen des Werkstückes senkrecht auf eine seiner langen Schmalseiten und Treiberrollen zum Transportieren des Werkstückes zu einem senkrechten Flämmturm mit einem starren vertikal aufgerichteten Flämmbrennerrahmen mit einer Mehrzahl an allen seinen vier Seiten angeordneten Flämmbrennern vorgesehen. Der Flämmbrennerrahmen umschließt das auf seiner langen Schmalseite senkrecht aufgestellte und zu flämmende Werkstück. Mindestens eine in der Nähe der Flämmbrenner installierte Granulierdüse dient zum Abgranulieren von entstehendem abgeschmolzenen Stahl und Schlacke quer zur Senkrechten. Weitere Treiberrollen transportieren das Werkstück zu einer nachfolgenden Ablagevorrichtung zum Ablegen auf einer seiner Breitseiten auf einem weiteren Rollgang.

Nachteilig ist auch hier, dass zum Flämmen aller vier Seiten des Werkstückes, nämlich der langen Schmalseiten und Breitseiten, mehrere Arbeitsgänge notwendig sind und das Werkstück mehrfach umgestellt werden muss, was erheblichen Zeit- und Transportaufwand mit sich bringt. Zudem ist der Flämmbrennerrahmen mit der Vielzahl von Flämmbrennern sehr teuer und aufwendig in der Herstellung und Wartung.

### Aufgabe

Aufgabe der Erfindung ist es, eine Flämmmaschine der eingangs genannten Art zu schaffen, die kompakt ausgebildet ist, weniger aufwendig und kostengünstiger herzustellen und zu betreiben ist, sowie den Verbrauch der zum Flämmen notwendigen Medien verringert und darüber hinaus den Flämmvorgang optimiert.

### Lösung

Diese Aufgabe wird durch die Erfindung mit den Merkmalen des unabhängigen Anspruchs 1 gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht.

Erfindungsgemäß wird die Aufgabe dadurch gelöst, dass in einer im Rollengang ausgebildeten Lücke die Flämmmaschine aufgestellt ist, die einen quer zum Rollengang angeordneten, U-förmigen Brennerbalken mit einem als Verteilerleiste ausgebildeten Flämmaggregat aufweist, wobei der Brennerbalken höhenverstellbar und während des Vor- und Zurückfahrens des Werkstückes um etwa 180° um die zu flämmenden Oberseite, Unterseite und Stirnseiten des Werkstückes mittels einem Schwenkantrieb um eine horizontale Achse verschwenkbar ist.

Gemäß einer weiteren Ausbildung der Flämmmaschine ist der Brennerbalken zur Höheneinstellung relativ zum Werkstück mittels Hubzylindern verstellbar ausgebildet und zumindest in einer Rahmenführung geführt. Dabei können die Hubzylinder pneumatisch, hydraulisch oder elektromechanisch gesteuert werden. Die Höhenverstellung erfolgt dabei vor und nach dem Anheizprozess und gegebenenfalls während des Flämmvorganges.

Weiterhin ist am horizontalen Teil des Brennerbalkens das als Verteilerleiste ausgebildete Flämmaggregat mit einer Mehrzahl von nebeneinander angeordneten Verteilerköpfen mit Flämmbrennerlippen angeordnet. Dabei weist jeder Verteilerkopf eine obere und eine untere Flämmbrennerlippe auf, die zwischen sich einen Flämmschlitz bilden. Die Lippen werden jeweils mit den Medien Heizgas, Heizsauerstoff und Flämmsauerstoff versorgt.

Bevorzugt sind die Flämmbrennerlippen der Verteilerköpfe in einem Winkel von vorzugsweise etwa 30° zur Waagerechten hin zum Werkstück ausgerichtet. Dadurch werden beim Flämmen abgetragene Teilchen und Schmutz weggeblasen. Somit können sich geschmolzener Stahl und Schlacke nicht mehr auf dem Werkstück, dem jeweils anderen Flämmaggregat oder anderen umgebenden Einrichtungsteilen absetzen, festsetzen und diese verkrusten, so dass eine Verschmutzung weitgehend vermieden wird. Darüber hinaus wird ein optimaler und wirtschaftlicher Flämmwinkel zum Werkstück erreicht.

Dabei sind die Seitenflämmaggregate mittels Fahrantrieben horizontal bewegbar ausgebildet.

Die erfindungsgemäße Flämmmaschine kann in einer Lücke im Transport-Rollengang für die zum Flämmen vorgesehenen Werkstücke fest stationiert sein. Dabei ist der Rollengang derart unterbrochen, dass die Flämmmaschine in diese Lücke hineinpasst und ein Verschwenken des quer zum Rollengang ausgerichteten Brennerbalkens ermöglicht wird. Es sei ausdrücklich darauf hingewiesen, dass die Flämmmaschine stattdessen am Ende des Rollenganges stationiert werden kann, so dass die Lücke quasi durch das Rollengangende gebildet wird.

Die Flämmbrennerlippen der Verteilerköpfe sind zum Anheizen zunächst auf die Vorderkante der Oberseite des Werkstückes und die Flämmbrennerlippen der Seitenflämmaggregate auf die Vorderkanten der Längsseiten des Werkstückes gerichtet. Dabei werden die Medien Heizgas, Heizsauerstoff und Flämmsauerstoff zugeführt. Zu diesem Zeitpunkt wird der Brennerbalken mit dem Flämmaggregat um ein kleines Maß angehoben, um ein Zünden im vorderen Bereich des Werkstückes zu vermeiden. Nach dem Anheizen wird der Brennerbalken wieder abgesenkt und der Flämmsauerstoffstrom durch den durch die Flämmbrennerlippen gebildeten Flämmschlitz verstärkt, wobei sich auch die Werkstückoberfläche entzündet und Schlacke bildend verbrennt. Dadurch werden während des Flämmens normabweichende Gefügestrukturen und Oberflächenfehler, wie Risse, Grate und Schlackeneinschlüsse und dergleichen, entfernt.

Während des Flämmvorganges wird das Werkstück durch beispielsweise Treiberrollen auf dem Rollengang vor und zurück bewegt.

Zunächst wird das zu flämmende Werkstück, z.B. eine Bramme, auf einem in der Regel ohnehin in einer Stranggießanlage vorhandenen Rollgang an die Flämmmaschine herangeführt, und zwar flach auf einer seiner Breitseiten liegend, wie es aus der Stranggießanlage üblicherweise transportiert wird. Nun wird das Werkstück je nach gewünschter Flämmrichtung mit einer gewählten Transportgeschwindigkeit nach vorn oder zurück über die Lücke im Rollengang hinweg durch die Flämmmaschine bewegt. Das Flämmaggregat am Brennerbalken flämmt nun die Oberseite des Werkstückes. Gleichzeitig flammen die Seitenflämmaggregate die Längsseiten des Werkstückes. Danach steht das Werkstück still.

Nun wird der Brennerbalken mit dem Flämmaggregat um eine horizontale Achse um 90° nach vorn geschwenkt und flämmt die vordere Stirnseite des Werkstückes. Während dieses Vorganges werden die Seitenflämmaggregate abgeschaltet bzw. deren Leistung minimiert. Wurde diese Stirnseite geflämmt, wird der Brennerbalken mit dem Flämmaggregat um weitere 90° nach unten geschwenkt und das Werkstück auf dem Rollengang vor oder zurück gefahren. Dabei wird nun die Unterseite des Werkstückes geflämmt. Danach erfolgt das Flämmen der hinteren Stirnseite des Werkstückes analog wie dessen vordere Stirnseite.

Dadurch wird ein Flämmen aller sechs Seiten, nämlich Oberseite und Unterseite sowie der beiden Stirnseiten und der beiden Längsseiten des Werkstückes, mit einer kompakten Flämmmaschine ermöglicht, ohne dass das extrem schwere Werkstück in irgendeiner Weise mit einer wuchtigen, massigen und schweren Wendeeinrichtung bewegt werden muss. Eine solche Wendeeinrichtung ist bei der erfindungsgemäßen Flämmmaschine nicht mehr notwendig.

Dadurch ist die Flämmmaschine in Herstellung, Anschaffung und Wartung sicherer und erheblich preiswerter. Des Weiteren sind sowohl die Stoßverbräuche an Flämmsauerstoff, Heizsauerstoff und Heizgas als auch die Entsorgung von Rauchgasen, Granulierwasser, Abbrand, Zunder oder Schlacke nur etwa halb so hoch wie bei bekannten vergleichbaren Vierseiten-Flämmmaschinen gemäß dem Stand der Technik. Das gleiche trifft auf die Wartungs- und Reparaturkosten zu.

Der der Erfindung zugrunde liegende Gedanke wird in der nachfolgenden Beschreibung anhand eines Ausführungsbeispieles, das in den Zeichnungen dargestellt ist, näher beschrieben. Es zeigen:
- Fig. 1: eine Vordersicht einer Flämmmaschine zum Flämmen von Werkstücken,
- Fig. 2: eine Seitenansicht der Flämmmaschine gemäß Fig. 1 in einem ersten Arbeitsschritt,
- Fig. 3: eine Seitenansicht der Flämmmaschine gemäß Fig. 1 in einem zweiten Arbeitsschritt, und
- Fig. 4: eine Seitenansicht der Flämmmaschine gemäß Fig. 1 in einem dritten Arbeitsschritt.

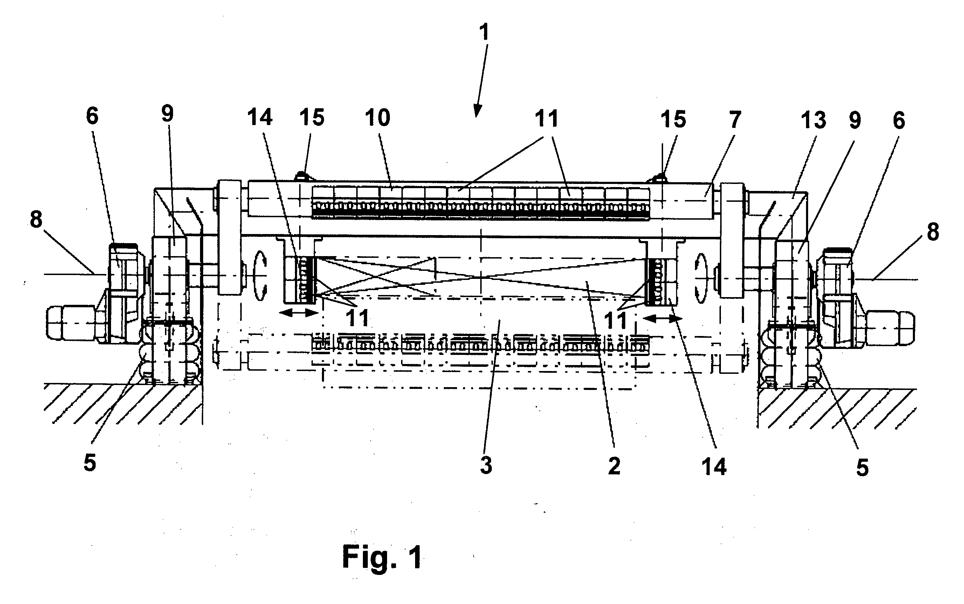

Die in den Fig. 1 bis Fig. 4 gezeigte Flämmmaschine 1 ist zum Flämmen von warmen und kalten Werkstücken 2, wie Brammen, Blöcke und Knüppel aus Stahl, in und nach Stranggießanlage vorgesehen.

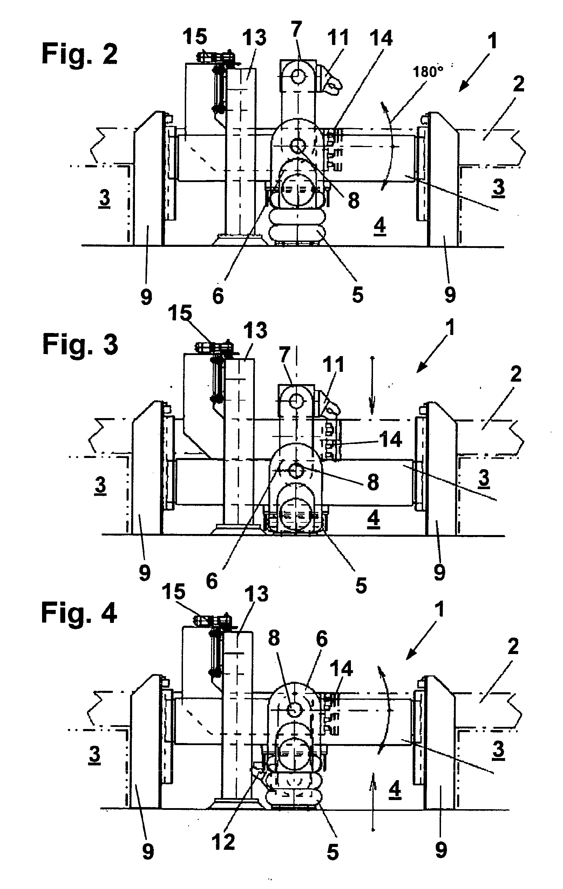

Die nicht näher dargestellte Stranggießanlage weist einen - in Strich-Punkt-Punkt-Strich-Linie gezeichneten - Rollengang 3 auf, auf dem das Werkstück 2 zur Flämmmaschine 1 transportiert und während des Betriebes der Flämmmaschine 1 auf diesem vor und zurück bewegt wird. Wie insbesondere aus den Fig. 2 bis Fig. 4 ersichtlich ist, bildet der Rollengang 3 eine Lücke 4, in welcher die Flämmmaschine 1 stationiert und die quer zum Rollengang 3 und damit quer zur Transportrichtung des Werkstückes 2 ausgerichtet ist. Durch die Kompaktheit der Flämmmaschine 1 ist die Lücke 4 klein genug, dass das Werkstück 2 problemlos über diese bewegt werden kann, ohne dass das Werkstück 2 abkippen kann.

An beiden Seiten des Rollenganges 3 ist jeweils ein Hubzylinder 5 der Flämmmaschine 1 mit einem jeweils zugehörigen Schwenkantrieb 6 angeordnet. Die Hubzylinder 5 und die Schwenkantriebe 6 sind mit einem U-förmigen Brennerbalken 7 verbunden, der um eine horizontale Achse 8 und etwa 180° verschwenkbar, nämlich von oben nach unten und umgekehrt, und darüber hinaus höhenverstellbar ist. Während der Höhenverstellbarkeit wird der Brennerbalken 7 in einer Rahmenführung 9 geführt.

Der horizontale Teil des Brennerbalkens 7 besitzt ein als Verteilerleiste ausgebildetes Flämmaggregat 10, welches eine Mehrzahl von nebeneinander angeordneten Verteilerköpfen 11 aufweist. Jeder Verteilerkopf 11 besitzt eine obere und untere Flämmbrennerlippe 12, wobei der Verteilerkopf 11 und die Flämmbrennerlippen 12 mit zum Flämmen benötigten Medien, wie Heizgas, Heizsauerstoff und Flämmsauerstoff, über eine nicht näher dargestellte Zuleitung gespeist werden. Die Vielzahl der Flämmbrennerlippen 12 bildet somit einen durchgängigen Flämmschlitz.

Des Weiteren weist gemäß der Erfindung die Flämmmaschine 1 eine starre Maschinenbrücke 13 auf, die sich ebenfalls quer über den Rollengang 3 und somit quer über das Werkstück 2 erstreckt. An der Maschinenbrücke 13 sind gemäß der Erfindung zwei zueinander beabstandete Seitenflämmaggregate 14 angeordnet, die mittels Fahrantrieben 15 horizontal an der Maschinenbrücke 13 verfahrbar sind. Die Seitenflämmaggregate 14 besitzen ebenfalls jeweils eine Mehrzahl von Verteilerköpfen 11 mit Paaren von Flämmbrennerlippen 12, in der gleichen Weise, wie die Verteilerköpfe 11 am Brennerbalken 7.

Während die Verteilerköpfe 11 am Brennerbalken 7 zum Flämmen der Oberseite und Unterseite sowie der Stirnseiten des Werkstückes 2 vorgesehen sind, dienen die Verteilerköpfe 11 der Seitenflämmaggregate 14 zum Flämmen der Längsseiten des Werkstückes 2.

Demgemäß kann der Brennerbalken 7 zum Flämmen der Oberseite, der Stirnseiten und der Unterseite des Werkstückes 2 durch die Schwenkantriebe 4 verschwenkt werden.

Fig. 2 zeigt die Flämmmaschine 1, bei welcher der Brennerbalken 7 in der Rahmenführung 9 nach oben gefahren ist. In dieser Position werden die Verteilerköpfe 11 des Brennerbalkens 7 mit den zum Flämmen notwendigen Medien versorgt und die Oberseite des Werkstückes 2 angeheizt und somit zum Flämmen vorbereitet. In gleicher Weise heizen die Verteilerköpfe 11 der Seitenflämmaggregate 14 die Längsseiten des Werkstückes 2 an.

Fig. 3 zeigt die Flämmmaschine 1, bei welcher der Brennerbalken 7 in der Rahmenführung 9 nach unten gefahren ist. In dieser Position flämmen die Verteilerköpfe 11 des Brennerbalkens 7 und die Seitenflämmaggregate 14 die Oberseite und die beiden Längsseiten des Werkstückes 2, wobei das Werkstück 2 durch am Rollengang 3 angeordnete, nicht näher gezeigte und an sich bekannte Treiberrollen durch die Flämmmaschine 1 vor oder zurück bewegt wird.

Fig. 4 zeigt die Flämmmaschine 1, bei welcher der Brennerbalken 7 in der Rahmenführung 9 wieder nach oben gefahren ist. Gleichzeitig wurde der Brennerbalken 7 um 180° aus seiner oberen Stellung in seine untere Stellung verschwenkt. Nun erfolgt das Flämmen der Unterseite des Werkstückes 2 in gleicher Weise, wie in Bezug auf Fig. 3 geschildert. Dabei wird das Werkstück 2 durch die am Rollengang 3 angeordneten Treiberrollen durch die Flämmmaschine 1 zurück oder vor bewegt.

In analoger Weise erfolgt ein Flämmen der beiden Stirnseiten des Werkstückes 2, wie in Bezug auf die Fig. 3 und Fig. 4 beschrieben wurde. Dabei wird der Brennerbalken 7 beispielsweise aus seiner oberen Stellung lediglich um 90° verschwenkt. Dieser Vorgang ist in den Zeichnungen nicht gesondert dargestellt.
Ein Flämmen der beiden Längsseiten des Werkstückes 2 ist jedoch nur einmal notwendig.

### Bezugszeichen

- 1: Flämmaschine
- 2: Werkstück
- 3: Rollengang
- 4: Lücke
- 5: Hubzylinder
- 6: Schwenkantrieb
- 7: Brennerbalken
- 8: Horizontale Achse
- 9: Rahmenführung
- 10: Flämmaggregat
- 11: Verteilerköpfe
- 12: Flämmbrennerlippen
- 13: Maschinenbrücke
- 14: Seitenflämmaggregat
- 15: Fahrantrieb

## Patentansprüche

1. Flämmmaschine (1) zum Flämmen von warmen und kalten Werkstücken (2), wie Brammen, Blöcken und Knüppeln aus Stahl, für den Einsatz in oder nach Stranggießanlagen, mit einem in Transportrichtung des Werkstückes (2) befindlichen Rollengang (3), auf dem das zu flämmende Werkstück (2) vor und zurück verfahrbar ist;
wobei in einer im Rollengang (3) ausgebildeten Lücke (4) die Flämmmaschine (1) aufgestellt sein kann, die einen quer zum Rollengang (3) angeordneten, U-förmigen Brennerbalken (7) mit einem als Verteilerleiste ausgebildeten Flämmaggregat (10)
aufweist;
wobei der Brennerbalken (7) höhenverstellbar und während des Vor- und Zurückfahrens des Werkstückes (2) um etwa 180° um die zu flämmenden Oberseite, Unterseite und Stirnseiten des Werkstückes (2) mittels eines Schwenkantriebs (6) um eine horizontale Achse (8) verschwenkbar ist; **dadurch gekennzeichnet, dass** die Flämmmaschine (1) eine starre Maschinenbrücke (13) aufweist, die sich ebenfalls quer über den Rollengang (3) erstreckt, und
dass an der quer zum Rollengang (3) angeordneten Maschinenbrücke (13) zumindest zwei zueinander beabstandete Seitenflämmaggregate (14) mit Verteilerköpfen (11) mit Flämmbrennerlippen (12) zum Flämmen der Längsseiten des Werkstückes (2) angeordnet sind.

2. Flämmmaschine nach Anspruch 1,
**dadurch gekennzeichnet,**
**dass** der Brennerbalken (7) zur Höheneinstellung relativ zum Werkstück (2) mittels Hubzylindern (5) verstellbar ausgebildet und zumindest in einer Rahmenführung (9) geführt ist.

3. Flämmmaschine nach Anspruch 1,
**dadurch gekennzeichnet,**
**dass** am horizontalen Teil des Brennerbalkens (7) das als Verteilerleiste ausgebildete Flämmaggregat (10) mit einer Mehrzahl von nebeneinander angeordneten Verteilerköpfen (11) mit Flämmbrennerlippen (12) angeordnet ist.

4. Flämmmaschine nach Anspruch 3,
**dadurch gekennzeichnet,**
**dass** die Flämmbrennerlippen (12) der Verteilerköpfe (11) in einem Winkel von vorzugsweise etwa 30° zur Waagerechten hin zum Werkstück (2) ausgerichtet sind.

5. Flämmmaschine nach Anspruch 1,
**dadurch gekennzeichnet,**
**dass** die Seitenflämmaggregate (14) mittels Fahrantrieben (15) horizontal bewegbar ausgebildet sind.

## Claims

1. A scarfing machine (1) for scarfing hot and cold workpieces (2) made of steel, such as slabs, blocks and billets, for use in or downstream of continuous casting systems, with a roller conveyor (3) located in the transport direction of the workpiece (2), on which conveyor the workpiece to be scarfed can be moved forwards and backwards; wherein the scarfing machine (1) can be set up in a gap (4) formed in the roller conveyor (3), the scarfing machine having a U-shaped burner beam (7) that is arranged transversely to the roller conveyor (3) with a scarfing unit (10) formed as a distributor strip;
wherein the burner beam (7) is height-adjustable and can be pivoted by means of a pivot drive (6) by approximately 180° about a horizontal axis (8) around the top, bottom and sides of the workpiece to be scarfed as the workpiece (2) moves forwards and backward,
**characterized in**
**that** the scarfing machine (1) has a rigid machine bridge (13), which also extends transversely over the roller conveyor (3), and
**that** at least two side scarfing units (14) spaced apart from each other with distributor heads (11) with scarfing burner lips (12) for scarfing the longitudinal sides of the workpiece (2) are arranged on the machine bridge (13) arranged transversely to the roller conveyor (3).

2. A scarfing machine according to Claim 1
**characterized in**
**that** the burner beam (7) is designed adjustably for the height-adjustment relative to the workpiece (2) by means of lifting cylinders (5) and is guided at least in one frame guide (9).

3. A scarfing machine according to Claim 1
**characterized in**
**that** on the horizontal part of the burner beam (7) the scarfing unit (10) formed as a distributor strip is arranged with a plurality of distributor heads (11) with scarfing burner lips (12) arranged next to each other.

4. A scarfing machine according to Claim 3,
**characterized in**
**that** the scarfing burner lips (12) of the distributor heads (11) are aligned to the workpiece (2) at an angle of preferably approximately 30° towards the horizontal.

5. A scarfing machine according to Claim 1
**characterized in**
**that** the side scarfing unit (14) is designed horizontally movable by means of traction drives (15).

## Revendications

1. Machine de flambage (1) pour le flambage de pièces (2) chaudes et froides comme des brames, des blocs et des billettes en acier, pour une utilisation dans ou après des installations de coulée continue, avec un train de rouleaux (3) se trouvant dans la direction de transport de la pièce (2), sur lequel la pièce (2) à flamber pouvant être déplacée vers l'avant et vers l'arrière;
la machine de flambage (1) pouvant être posée dans une lacune (4) aménagée dans le train de rouleaux (3), qui
comprend une barre de brûleur (7) en forme de U, disposée transversalement par rapport au train de rouleaux (3), avec un agrégat de flambage (10) conçu comme une bande de distribution ;
la barre de brûleur (7) étant
réglable en hauteur et
pouvant être pivotée pendant le déplacement vers l'avant et vers l'arrière de la pièce (2) d'environ 180° autour du côté supérieur, du côté inférieur et des côtés frontaux à flamber de la pièce (2) à l'aide d'un entraînement pivotant (6) autour d'un axe horizontal (8) ;
**caractérisée en ce que**
la machine de flambage (1) comprend un pont de machine (13) rigide, qui s'étend également transversalement au-dessus du train de rouleaux (3) et
**en ce que**, sur le pont de machine (13) disposé transversalement par rapport au train de rouleaux (3), se trouvent au moins deux agrégats de flambage latéraux (14) avec des têtes de distribution (11) avec des lèvres de brûleurs de flambage (12) pour le flambage des côtés longitudinaux de la pièce (2).

2. Machine de flambage selon la revendication 1,
**caractérisée en ce que**
la barre de brûleur (7) est conçue de manière réglable, pour le réglage en hauteur par rapport à la pièce (2) à l'aide de cylindres de levage (5) et est guidée dans au moins un guidage de cadre (9).

3. Machine de flambage selon la revendication 1,
**caractérisée en ce que**
sur la partie horizontale de la barre de brûleur (7), l'agrégat de flambage (10) conçu en tant que bande de distribution est disposée avec une pluralité de têtes de distribution (11) juxtaposées avec des lèvres de brûleur de flambage (12).

4. Machine de flambage selon la revendication 3,
**caractérisée en ce que**
les lèvres du brûleur de flambage (12) des têtes de distribution (11) sont orientées avec un angle de préférence d'environ 30° par rapport à l'horizontale en direction de la pièce (2).

5. Machine de flambage selon la revendication 1,
**caractérisée en ce que**
les agrégats de flambage latéraux (14) sont conçus de manière mobile horizontalement au moyen d'entraînement (15).
